# EUROPEAN PATENT SPECIFICATION

(11) **EP 4 184 052 B1**
(45) Date of publication and mention of the grant of the patent: **29.01.2025**
(21) Application number: 21861607.6
(22) Date of filing: 25.08.2021
(51) Int. Cl.: F17C 13/00, B01D 53/14, C02F 1/66, B63H 21/38

(54) **SHIP**
SCHIFF
NAVIRE

(30) Priority: 25.08.2020 JP 2020141419; 17.12.2020 JP 2020209288
(43) Date of publication of application: 24.05.2023
(73) Proprietor: Mitsubishi Shipbuilding Co., Ltd., Tokyo 108-8015 (JP)
(72) Inventor: OGATA Toshio, Yokohama-shi, Kanagawa 220-8401 (JP); UNSEKI Takashi, Tokyo 108-0014 (JP)
(74) Representative: Studio Torta S.p.A.
(86) International application number: PCT/JP2021/031139
(87) International publication number: WO 2022/045184

(56) References cited:
- WO-A1-2021/124622
- JP-A- 2002 173 088
- JP-A- 2013 011 332
- JP-A- 2020 514 160
- JP-A- H07 206 426
- KR-A- 20170 057 714
- KR-A- 20170 115 337
- KR-B1- 102 111 503
- "Water seal in the vent outlet for ammonia systems on an ammonia fueled engine", RESEARCH DISCLOSURE, KENNETH MASON PUBLICATIONS, HAMPSHIRE, UK, GB, vol. 675, no. 38, 1 July 2020 (2020-07-01), pages 966, XP007148475, ISSN: 0374-4353, [retrieved on 20200609]

## Description

### Technical Field

The present disclosure relates to a ship.

This application claims the right of priority based on Japanese Patent Application No. 2020-141419 filed with the Japan Patent Office on August 25, 2020 and Japanese Patent Application No. 2020-209288 filed with the Japan Patent Office on December 17, 2020.

### Background Art

A ship that is loaded with a combustible gas as fuel for ship propulsion or cargo is provided with a vent post for discharging the combustible gas to the atmosphere outside the ship. For example, PTL 1 discloses a configuration in which a combustible gas remaining in a pipe or the like of a gas engine that is driven by the combustible gas (gas fuel) is purged with a nitrogen gas or the like and released to the atmosphere through a vent post.

### Citation List

### Patent Literature

[PTL 1] Japanese Unexamined Patent Application Publication No. 2013-11332
[PTL 2] "Water seal in the vent outlet for ammonia systems on an ammonia fueled engine", RESEARCH DISCLOSURE, KENNETH MASON PUBLICATIONS, HAMPSHIRE, UK, GB, vol. 675, no. 38, 1 July 2020 (2020-07-01), page 966, XP007148475, ISSN: 0374-4353

### Summary of Invention

### Technical Problem

Incidentally, it is being considered to load ammonia as a gas fuel. There is a possibility that ammonia may not sufficiently diffuse even if it is purged with an inert gas and released to the atmosphere through a vent post. One of the reasons why ammonia is difficult to diffuse into the atmosphere in this manner is, for example, that ammonia more easily reacts with moisture in the air than other combustible gases such as a methane gas or a butane gas and reacts with moisture in the air to become mist-like (droplet-like) ammonia water and the specific gravity becomes larger than that of the atmosphere.

Further, since ammonia has high irritation to the mucous membranes of the human body, it is desirable to reduce the amount of ammonia released into the atmosphere as much as possible such that it does not come into contact with the human body.

The present disclosure has been made to solve the above problems, and has an object to provide a ship in which it is possible to reduce the amount of ammonia released into the atmosphere.

### Solution to Problem

In order to solve the above problems, a ship according to the present disclosure includes a hull, an ammonia storage tank, an inert gas supply device, a vent pipe, and a treatment tank. The ammonia storage tank can store ammonia therein. The inert gas supply device supplies an inert gas to a circulation path for ammonia, which communicates with the ammonia storage tank. The vent pipe leads the ammonia in the circulation path together with the inert gas supplied by the inert gas supply device to the outside. The treatment tank is provided in the middle of the vent pipe. Water is stored in the treatment tank. The inert gas and the ammonia are introduced into the treatment tank from the vent pipe below a water surface of the water. Advantageous Effects of Invention

According to the ship of the present disclosure, it is possible to reduce the amount of ammonia released into the atmosphere.

### Brief Description of Drawings

Fig. 1 is a side view of a ship according to an embodiment of the present disclosure.
Fig. 2 is a diagram showing a system that includes an ammonia storage tank, an internal combustion engine, and a treatment tank provided in the ship according to the embodiment of the present disclosure.
Fig. 3 is a diagram showing the flow of ammonia in normal times in the ship of the embodiment of the present disclosure.
Fig. 4 is a diagram showing the flow of a gas in a case where purging is performed in the ship of the embodiment of the present disclosure.
Fig. 5 is a sectional view showing a configuration of a treatment tank according to a first embodiment of the present disclosure.
Fig. 6 is a sectional view showing a configuration of a treatment tank according to a second embodiment of the present disclosure.
Fig. 7 is a diagram showing a schematic configuration around a treatment tank and a water recovery tank according to a third embodiment of the present disclosure.
Fig. 8 is a diagram showing a schematic configuration around a treatment tank and a water recovery tank according to a fourth embodiment of the present disclosure. Description of Embodiments

### <First Embodiment>

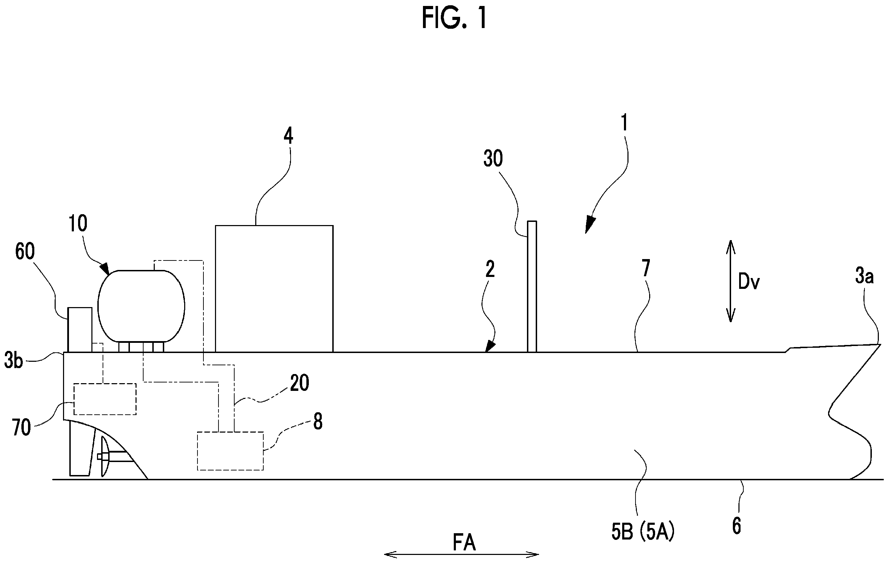

Hereinafter, a ship according to an embodiment of the present disclosure will be described with reference to Figs. 1 to 5.

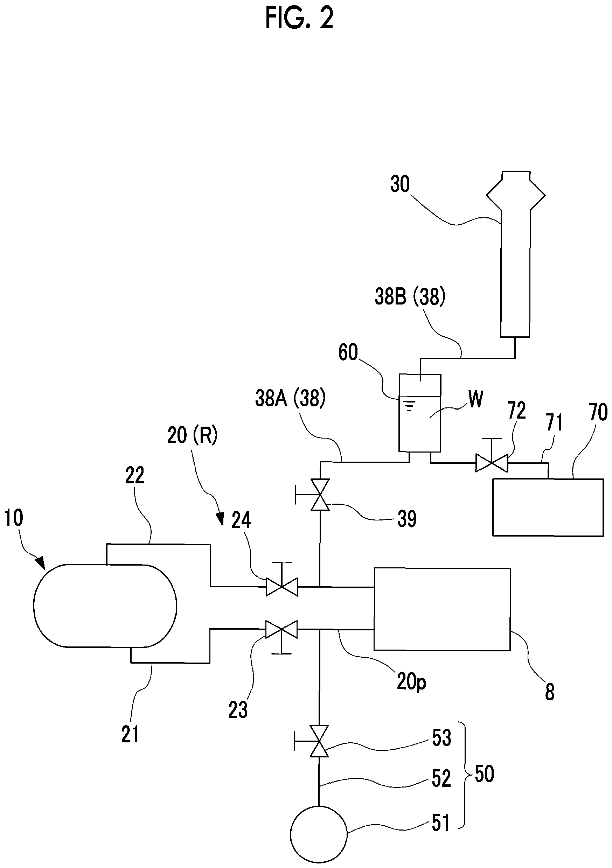

As shown in Fig. 1, a ship 1 of the present embodiment includes a hull 2, a superstructure 4, an ammonia storage tank 10, an inert gas supply device 50 (refer to Fig. 2), a vent pipe 38 (refer to Fig. 2), and a treatment tank 60. The ship type of the ship 1 is not limited to a specific type. As the ship type of the ship 1, for example, a liquefied gas carrier, a ferry, a RORO ship, a car carrier, a passenger ship, or the like can be exemplified.

The hull 2 has a pair of broadsides 5A and 5B and a ship bottom 6 that form an outer shell of the hull. The broadsides 5A and 5B include a pair of broadside outer plates forming the left and right broadsides. The ship bottom 6 includes a ship bottom outer plate that connects the broadsides 5A and 5B. The outer shell of the hull 2 is formed in a U shape in a cross section orthogonal to a bow-stern direction FA by the pair of broadsides 5A and 5B and the ship bottom 6.

The hull 2 further includes an upper deck 7 that is a through deck which is disposed in the uppermost layer. The upper deck 7 that is exemplified in the present embodiment is also an exposed deck that is exposed to the outside. The superstructure 4 is formed on the upper deck 7. An accommodation space and the like are provided in the superstructure 4. For example, a cargo space (not shown) for loading cargo is provided in the hull 2 on the bow 3a side with respect to the superstructure 4 in the bow-stern direction FA and below the upper deck 7.

Further, an internal combustion engine 8 is provided inside the hull 2. The internal combustion engine 8 is used as a main engine for propelling the ship 1, a generator for supplying electricity to the ship, and the like. In the embodiment of the present disclosure, the internal combustion engine 8 is operated by using ammonia stored in the ammonia storage tank 10 as fuel.

The ammonia storage tank 10 stores liquefied ammonia. The ammonia storage tank 10 of the present embodiment is provided in the hull 2. A case where the ammonia storage tank 10 is disposed on the upper deck 7 on the stern 3b side with respect to the superstructure 4 in the bow-stern direction FA is exemplified.

The ammonia storage tank 10 and the internal combustion engine 8 are connected through a pipe system 20. As shown in Fig. 2, the pipe system 20 forms a circulation path R for ammonia, which communicates with the ammonia storage tank 10. The pipe system 20 includes a supply pipe 21, a return pipe 22, and on/off valves 23 and 24. The inert gas supply device 50 and a vent post 30 are connected to the pipe system 20.

Each of the supply pipe 21 and the return pipe 22 connects the ammonia storage tank 10 and the internal combustion engine 8. The supply pipe 21 supplies ammonia from the ammonia storage tank 10 to the internal combustion engine 8. The return pipe 22 returns surplus ammonia remaining without being used as fuel in the internal combustion engine 8 to the ammonia storage tank 10. The on/off valves 23 and 24 are provided in the supply pipe 21 and the return pipe 22. The on/off valves 23 and 24 are always in an open state when the internal combustion engine 8 operates. The on/off valves 23 and 24 are in a closed state when the internal combustion engine 8 is stopped. The flow paths formed inside the supply pipe 21 and the return pipe 22 are blocked by closing the on/off valves 23 and 24.

The inert gas supply device 50 supplies an inert gas to the circulation path R for ammonia, which communicates with the ammonia storage tank 10. The inert gas supply device 50 supplies the inert gas to the pipe system 20 which is the circulation path R. The inert gas supply device 50 includes an inert gas supply unit 51, an inert gas supply pipe 52, and an inert gas supply valve 53.

The inert gas supply unit 51 can supply an inert gas such as nitrogen (for example, an inert gas or the like) to the inert gas supply pipe 52. The inert gas supply pipe 52 connects the inert gas supply unit 51 and the pipe system 20. The inert gas supply pipe 52 is connected to a purge target region 20p of the pipe system 20. The purge target region 20p is the side including the internal combustion engine 8 between the on/off valve 23 of the supply pipe 21 and the on/off valve 24 of the return pipe 22 in the pipe system 20.

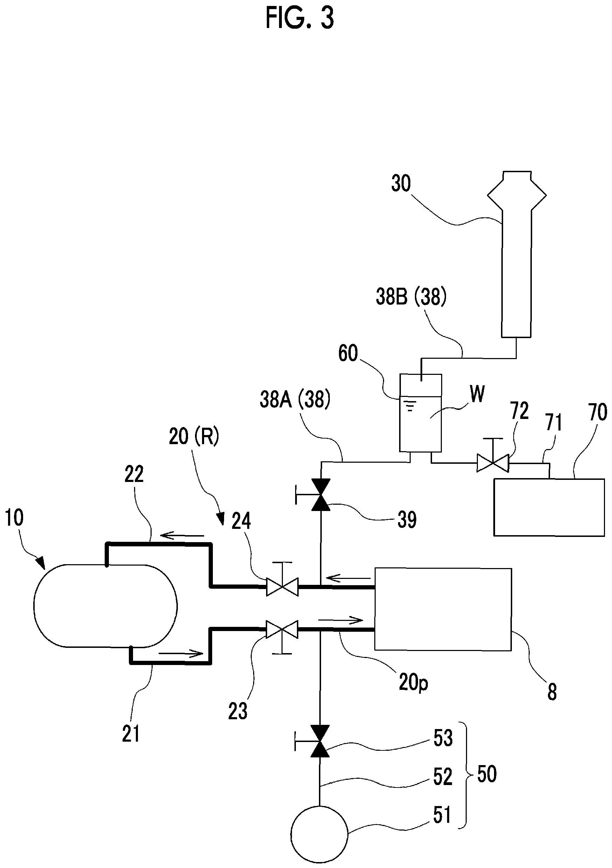

The inert gas supply valve 53 is provided in the inert gas supply pipe 52. As shown in Fig. 3, the inert gas supply valve 53 is in a closed state in normal times to cut off the supply of the inert gas from the inert gas supply unit 51 to the purge target region 20p of the pipe system 20. In this state, the on/off valves 23 and 24 are in an open state to allow ammonia to be supplied from the ammonia storage tank 10 to the internal combustion engine 8 through the supply pipe 21 and surplus ammonia to be returned from the internal combustion engine 8 to the ammonia storage tank 10.

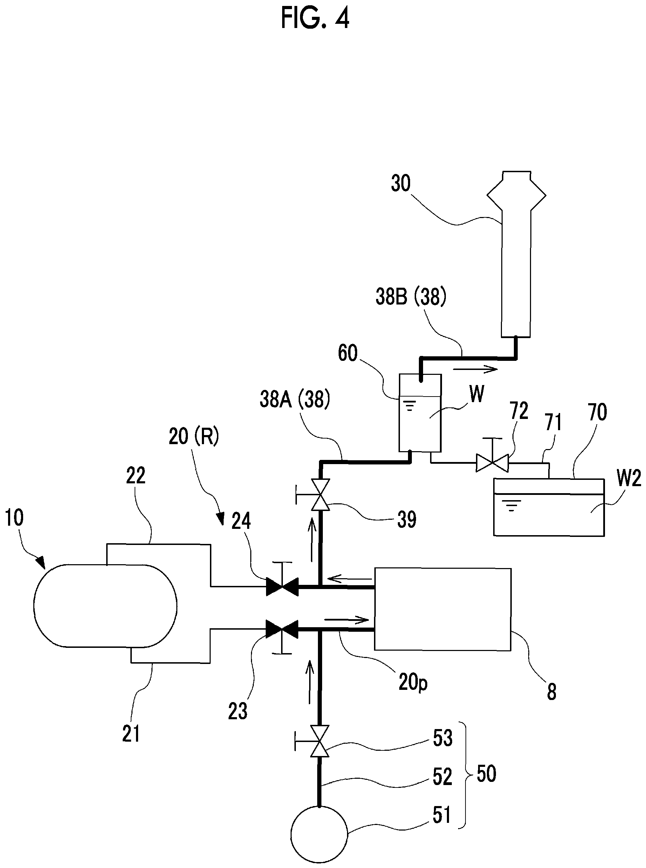

As shown in Fig. 4, when the internal combustion engine 8 is stopped for an emergency, for a long period of time, or the like, the inert gas supply valve 53 is changed from a closed state to an open state. In this state, the on/off valves 23 and 24 are in a closed state, and the supply pipe 21 and the return pipe 22 are blocked. That is, a state is created in which the supply of ammonia from the ammonia storage tank 10 to the internal combustion engine 8 is stopped. In this state, when the inert gas supply valve 53 is opened, the inert gas is supplied from the inert gas supply unit 51 to the purge target region 20p of the pipe system 20. The inert gas supply device 50 supplies the inert gas to the purge target region 20p of the pipe system 20, which is the circulation path R for ammonia, so that so-called purging to replace the ammonia in the purge target region 20p (the circulation path R) with the inert gas is performed.

The vent pipe 38 leads the ammonia in the circulation path R together with the inert gas that is supplied by the inert gas supply device 50 to the outside. One end of the vent pipe 38 is connected to the purge target region 20p as the circulation path R for ammonia, which communicates with the ammonia storage tank 10. The other end of the vent pipe 38 is connected to the vent post 30.

As shown in Fig. 1, the vent post 30 is provided on the upper deck 7 of the hull 2. The vent post 30 extends in an up-down direction Dv on the upper deck 7. The vent post 30 has a tubular shape extending in the up-down direction Dv and is open at the top portion thereof. As shown in Figs. 2 to 4, the other end of the vent pipe 38 described above is connected to a lower portion of the vent post 30.

A purge on/off valve 39 is provided in the vent pipe 38. As shown in Fig. 3, the purge on/off valve 39 is in a closed state in normal times to block the flow path in the vent pipe 38. As shown in Fig. 4, when the internal combustion engine 8 is stopped for an emergency, for a long period of time, or the like, the purge on/off valve 39 is changed from a closed state to an open state. That is, the purge on/off valve 39 is opened and closed in conjunction with the inert gas supply valve 53. The purge on/off valve 39 enters an open state in a case where the inert gas is supplied from the inert gas supply unit 51 to the purge target region 20p of the pipe system 20 by the inert gas supply device 50. When the purge on/off valve 39 is in an open state, the ammonia in the purge target region 20p is sent from the purge target region 20p of the pipe system 20 into the vent pipe 38 together with the inert gas.

The treatment tank 60 is disposed on the way from one end of the vent pipe 38 to the other end. More specifically, the treatment tank 60 is disposed between the purge on/off valve 39 and the vent post 30. As shown in Fig. 1, the treatment tank 60 of the embodiment of the present disclosure is provided on the upper deck 7, for example. The installation position of the treatment tank 60 is not limited at all, and it is sufficient if the treatment tank 60 is installed at an appropriate location on the hull 2.

Here, in the description of the present embodiment, the portion of the vent pipe 38 that is provided on the upstream side (the purge on/off valve 39 side) in the gas flow direction in the vent pipe 38 with respect to the treatment tank 60 is referred to as an upstream-side vent pipe 38A. Further, the portion of the vent pipe 38 that is provided on the downstream side (the vent post 30 side) in the gas flow direction in the vent pipe 38 with respect to the treatment tank 60 is referred to as a downstream-side vent pipe 38B. That is, the upstream-side vent pipe 38A is connected to the lower portion of the treatment tank 60, and the downstream-side vent pipe 38B is connected to the upper portion of the treatment tank 60.

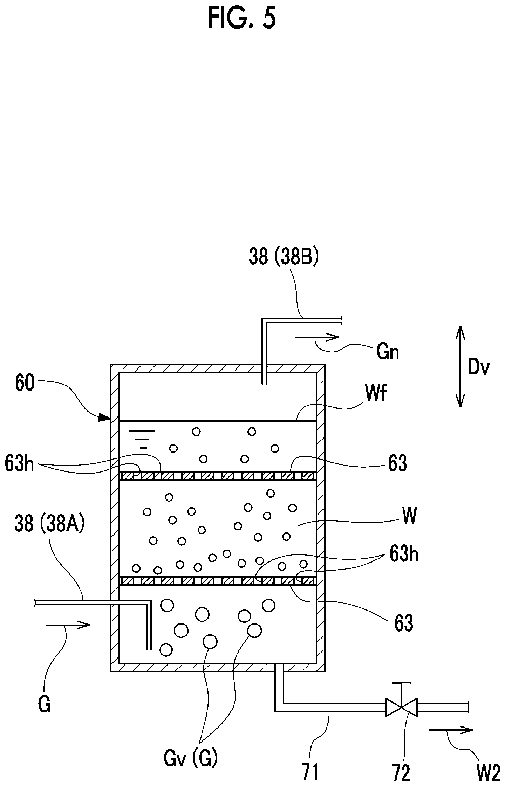

As shown in Fig. 5, water W is stored in the treatment tank 60. The inert gas and an ammonia gas (hereinafter sometimes referred to as "ammonia-containing gas G") sent from the purge on/off valve 39 side through the upstream-side vent pipe 38A connected to the lower portion of the treatment tank 60 are introduced into a region below a water surface Wf of the treatment tank 60. The upstream-side vent pipe 38A of the present embodiment extends downward within the treatment tank 60. Then, the ammonia-containing gas G is introduced into the lower portion of the treatment tank 60 from the lower end of the upstream-side vent pipe 38A.

In the water W in the treatment tank 60, the ammonia-containing gas G introduced from the upstream-side vent pipe 38A forms bubbles Gv, which float upward from below. At this time, the ammonia-containing gas G comes into contact with the water W in the treatment tank 60. Since ammonia easily reacts with the water W, the ammonia becomes ammonia water due to the reaction with the water W, and easily dissolves in the water. On the other hand, the inert gas is difficult to dissolve in the water W, so that the inert gas rises in the state of the bubbles Gv and is released into atmosphere above the water surface Wf in the treatment tank 60.

A porous member 63 is provided in the treatment tank 60. The porous member 63 is provided below the water surface Wf of the water W stored in the treatment tank 60. The porous member 63 has, for example, a flat plate shape and is provided along a plane intersecting (orthogonal to) the up-down direction Dv. A plurality of (a large number of) holes 63h are formed in the porous member 63. For the porous member 63 as described above, for example, perforated metal, wire mesh, or the like can be used.

The size of each hole 63h is set smaller than the size of the initial bubble Gv sent into the water W in the treatment tank 60 from the upstream-side vent pipe 38A. For example, in a case where each hole 63h is a round hole, it is favorable if the diameter of each hole 63h is smaller than the bubble diameter (for example, the average bubble diameter) of the initial bubbles Gv sent into the water W of the treatment tank 60. The bubbles Gv of the ammonia-containing gas G, which float upward from below in the water W of the treatment tank 60, pass through the holes 63h of the porous member 63 formed as described above, thereby being made finer. The bubbles Gv of the ammonia-containing gas G are made finer, so that the contact area between the bubbles Gv of the ammonia-containing gas G and the water increases. In this way, the ammonia contained in the gas G reacts with the water W in the treatment tank 60 and easily dissolves in the water W.

In this way, a gas Gn that has passed through the water W in the treatment tank 60 from below to above the water surface Wf contains a large amount of inert gas. The gas Gn may contain ammonia that does not dissolve in the water W. The gas Gn over the water surface Wf of the treatment tank 60 is sent to the vent post 30 through the downstream-side vent pipe 38B. The vent post 30 releases the gas Gn introduced from below into the atmosphere through the opening at the top portion.

A water recovery tank 70 (refer to Fig. 2) is connected to the treatment tank 60 through a recovery pipe 71. The water recovery tank 70 is provided inside the hull 2. A water recovery on/off valve 72 is provided in the recovery pipe 71. When the water recovery on/off valve 72 is opened after the purge treatment is ended, water W2 is discharged from the treatment tank 60 through the recovery pipe 71 and recovered in the water recovery tank 70. In the water recovery tank 70, the stored water W2 may be subjected to treatment to reduce the concentration of ammonia, neutralization treatment, or the like, by using seawater or the like separately taken in from the outside.

In the ship 1 of the embodiment described above, when the inert gas is supplied from the inert gas supply device 50 to the circulation path R for ammonia, the ammonia in the circulation path R is extruded to the vent pipe 38 together with the inert gas. In this way, so-called purging, in which the ammonia in the circulation path R is replaced with the inert gas, can be performed. The ammonia-containing gas Gn extruded to the vent pipe 38 is introduced to below the water surface Wf of the water W stored in the treatment tank 60 from the vent pipe 38. The ammonia-containing gas G forms the bubbles Gv in the water W in the treatment tank 60, and the bubbles Gv float upward from below. At this time, the water W comes into contact with the ammonia-containing gas G. Since ammonia easily reacts with the water W, it becomes ammonia water due to the reaction with the water W and dissolves in the water W. In this way, the content of ammonia in the gas Gn that is led from the vent pipe 38 to the outside through the treatment tank 60 is reduced. In this way, it becomes possible to reduce the amount of ammonia released into the atmosphere.

In the embodiment described above, the treatment tank 60 includes the porous member 63 having a plurality of holes 63h through which the bubbles Gv of the ammonia-containing gas G pass. In this way, the ammonia-containing gas G which floats upward from below in the state of the bubbles Gv below the water surface Wf of the water in the treatment tank 60 passes through the holes 63h of the porous member 63, so that the bubbles Gv are made finer according to the size of the hole 63h. The bubbles Gv of the ammonia-containing gas G are made finer, so that the contact area between the bubbles Gv of the ammonia-containing gas G and the water increases. As a result, the ammonia reacts with the water W in the treatment tank 60 and easily dissolves in the water W. In this way, it is possible to more efficiently reduce the amount of ammonia released into the atmosphere.

In the embodiment described above, the water recovery tank 70 that stores the water W2 which is discharged from the treatment tank 60 is further provided. In this way, the water W2 in which ammonia is dissolved in the treatment tank 60 can be stored in the water recovery tank 70. In the treatment tank 60, for example, treatment to dilute the ammonia contained in the recovered water W2, neutralization treatment, or the like can also be performed.

### <Second Embodiment>

Next, a second embodiment of the ship according to the invention will be described. In the second embodiment that is described below, since only the internal configuration of the treatment tank 60 is different from that of the first embodiment, the same portions as those in the first embodiment are denoted by the same reference numerals, and overlapping description is omitted.

### (Configuration of Treatment Tank)

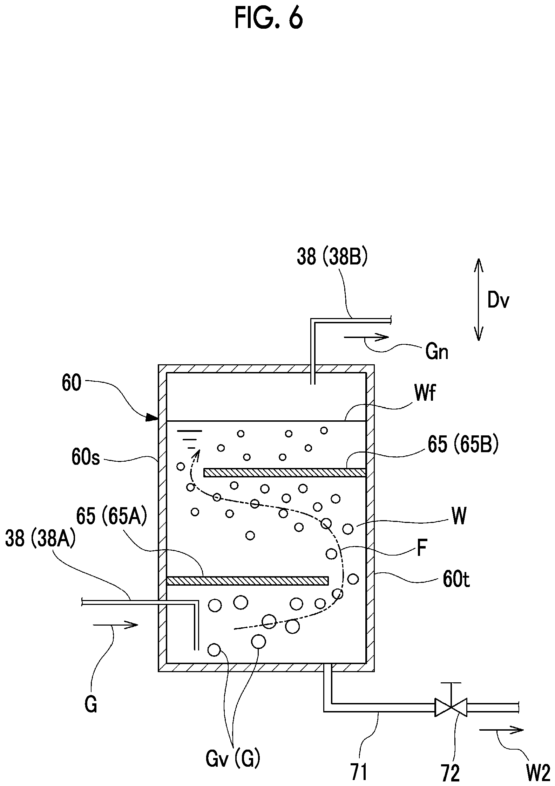

As shown in Fig. 6, in the second embodiment, the treatment tank 60 is provided on the way from one end to the other end of the vent pipe 38, as in the first embodiment. The treatment tank 60 stores the water W therein. The ammonia-containing gas G which is sent from the purge on/off valve 39 side through the upstream-side vent pipe 38A connected to the lower portion of the treatment tank 60 is introduced to below the water surface Wf of the treatment tank 60. In the water W in the treatment tank 60, the ammonia-containing gas G introduced from the upstream-side vent pipe 38A forms bubbles Gv, which float upward from below.

In the embodiment of the present disclosure, a partition plate 65 is provided inside the treatment tank 60. The partition plate 65 is provided below the water surface Wf of the water W in the treatment tank 60. In the embodiment of the present disclosure, for example, two partition plates 65 are provided with an interval in the up-down direction Dv. Each partition plate 65 is formed so as to follow a plane (for example, a horizontal plane) intersecting (orthogonal to) the up-down direction Dv. A partition plate 65A on one side is provided on a side surface 60s located on one side in the horizontal direction in the treatment tank 60. The partition plate 65A is provided with a gap in the horizontal direction interposed between it and a side surface 60t located on the other side in the horizontal direction in the treatment tank 60. A partition plate 65B on the other side is provided on the side surface 60t located on the other side in the horizontal direction in the treatment tank 60. The partition plate 65B is provided with a gap in the horizontal direction interposed between it and the side surface 60s located on one side in the horizontal direction in the treatment tank 60.

In the treatment tank 60 provided with the partition plate 65 as described above, when the bubbles Gv of the ammonia-containing gas G floating upward from below the water surface Wf hit against the partition plate 65, the bubbles Gv move along the bottom surface of the partition plate 65. Due to the two partition plates 65 provided in the treatment tank 60, a path F of the flow of the bubbles Gv of the ammonia-containing gas G in the treatment tank 60 is curved in a zigzag manner.

In the ship 1 of the embodiment described above, the bubbles Gv of the ammonia-containing gas G floating upward from below in the treatment tank 60 hit against the partition plates 65, so that the length of the path F of the flow of the bubble Gv of the ammonia-containing gas G in the treatment tank 60 increases. In this way, the contact time between the bubbles Gv of the ammonia-containing gas G and the water W increases. As a result, the ammonia reacts with the water W in the treatment tank 60 and easily dissolves in the water W. In this way, as in the first embodiment, it is possible to more efficiently reduce the amount of ammonia released into the atmosphere.

### <Third Embodiment>

Next, a third embodiment of the ship according to the invention will be described. In the third embodiment that is described below, since only the configuration around the treatment tank 60 and the water recovery tank 70 is different from that of the first embodiment, the same portions as those in the first embodiment are denoted by the same reference numerals, and overlapping description is omitted.

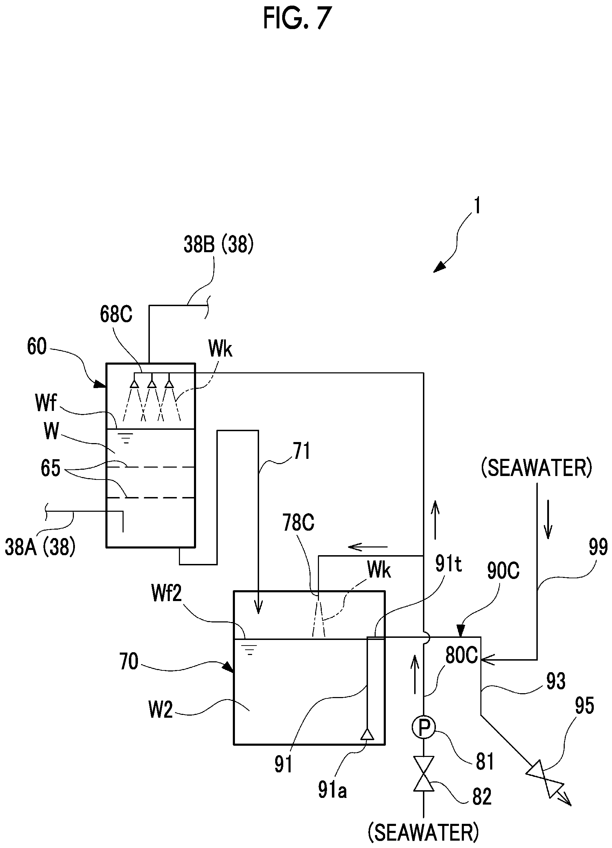

As shown in Fig. 7, in the treatment tank 60 and the water recovery tank 70 of the ship 1 of the third embodiment, dilution water is introduced from the outside through a dilution water introduction system 80C. In the third embodiment, the dilution water introduction system 80C introduces seawater as the dilution water from the outside of the hull 2. The dilution water introduction system 80C includes a pump 81 for sucking seawater from the outside of the hull 2, and an on/off valve 82. In the dilution water introduction system 80C, the on/off valve 82 is opened and the pump 81 is operated to introduce seawater and supply it to the treatment tank 60 and the water recovery tank 70.

The treatment tank 60 is provided with a water injection unit 68C. The water injection unit 68C injects water Wk supplied through the dilution water introduction system 80C in the form of a shower downward from above the water surface Wf of the water W in the treatment tank 60.

The water recovery tank 70 is provided with a water supply unit 78C. The water supply unit 78C supplies the water Wk, which is supplied through the dilution water introduction system 80C, downward from above the water W2 stored in the water recovery tank 70.

The water recovery tank 70 is connected to the treatment tank 60 through the recovery pipe 71, as in the first embodiment. A case where the water recovery on/off valve 72 is not provided in the recovery pipe 71 of the second embodiment is exemplified. However, the water recovery on/off valve 72 may be provided in the same manner as in the first embodiment. The recovery pipe 71 of the second embodiment is a so-called overflow pipe, and moves surplus water W to the water recovery tank 70 by its own weight when the water surface Wf in the treatment tank 60 reaches a predetermined level or higher.

A discharge system 90C is connected to the water recovery tank 70. The discharge system 90C discharges some of the water W2 stored in the water recovery tank 70. The discharge system 90C discharges surplus water W2 from the water recovery tank 70 to the outside as the dilution water is introduced from the outside by the dilution water introduction system 80C. The discharge system 90C includes an overflow pipe 91. A tip portion 91a of the overflow pipe 91 is open at a lower portion inside the water recovery tank 70. The overflow pipe 91 extends upward from the tip portion 91a and has a pipe top portion 91t at a defined height. The pipe top portion 91t is a portion disposed at the highest position in the overflow pipe 91. The overflow pipe 91 discharges the surplus water W2 when a water surface Wf2 in the water recovery tank 70 reaches a level equal to or higher than the pipe top portion 91t.

The discharge system 90C further includes a seawater supply unit 99. The seawater supply unit 99 supplies seawater taken in from outside to the water W2 that is discharged from the water recovery tank 70 through the overflow pipe 91. The seawater supply unit 99 merges, for example, seawater which is sent from a main cooling seawater pump (not shown) or the like, which takes in seawater from the outside of the hull 2 in order to cool various devices and the like provided within the hull 2, with the water in the overflow pipe 91 and sends it to a discharge pipe 93. In this way, the water W2 in the overflow pipe 91 is further diluted. An on/off valve 95 is provided in the discharge pipe 93. The on/off valve 95 is opened, so that as necessary, some of the water W2 in the water recovery tank 70 can be diluted with seawater that is supplied from the seawater supply unit 99 and then discharged overboard from the discharge pipe 93.

According to the configuration as described above, as in the first embodiment, it becomes possible to reduce the amount of ammonia released into the atmosphere by passing through the treatment tank 60. Further, as in the first embodiment, the water recovery tank 70 for storing the water W2 that is discharged from the treatment tank 60 is further provided. In this way, the water W2 in which ammonia is dissolved in the treatment tank 60 can be stored in the water recovery tank 70.

Further, the treatment tank 60 includes the water injection unit 68C. In the treatment tank 60, ammonia that has not completely dissolved in the water W in the treatment tank 60 is released into atmosphere above the water surface Wf together with the inert gas. The water W injected from the water injection unit 68C comes into contact with the ammonia released into atmosphere above the water surface Wf, so that the ammonia recovery efficiency can be improved.

Further, the water W in which ammonia is dissolved is diluted with the dilution water (the water Wk) introduced from the outside through the dilution water introduction system 80C, so that the ammonia concentration of the water W that is discharged overboard can be lowered.

Further, the seawater supply unit 99 for supplying seawater taken in from the outside is provided in the discharge system 90C, so that the ammonia concentration of the water W that is discharged overboard from the discharge system 90C can be lowered by the seawater that is supplied from the seawater supply unit 99.

In the third embodiment, the water injection unit 68C and the water supply unit 78C are provided. However, only one of the water injection unit 68C and the water supply unit 78C may be provided.

### <Fourth Embodiment>

Next, a fourth embodiment of the ship according to the invention will be described. In the fourth embodiment that is described below, since only the configuration around the treatment tank 60 and the water recovery tank 70 is different from that of the first and third embodiments, the same portions as those in the first and third embodiments are denoted by the same reference numerals, and overlapping description is omitted.

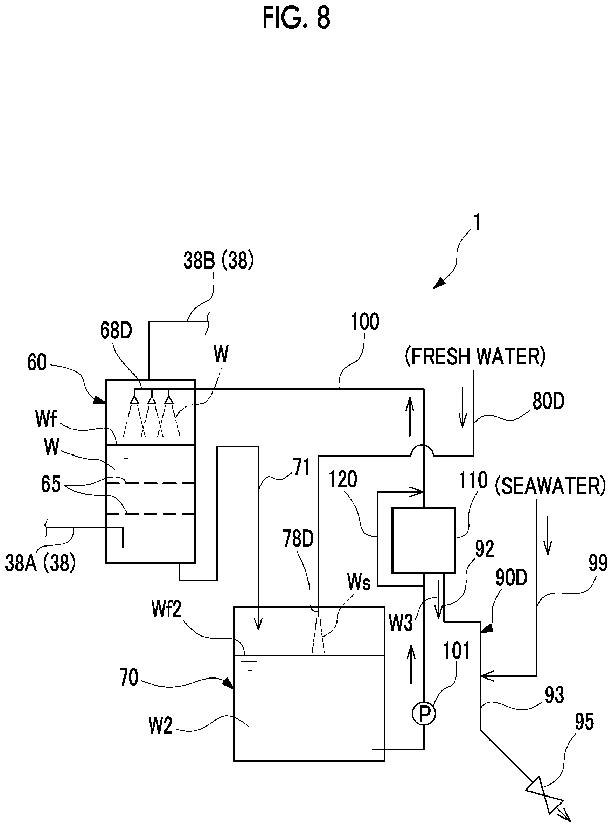

As shown in Fig. 8, the ship 1 of the present embodiment includes a circulation system 100. The circulation system 100 circulates some of the water W2 stored in the water recovery tank 70 to the treatment tank 60. The circulation system 100 includes a pump 101. The pump 101 sends the water W2 in the water recovery tank 70 to treatment tank 60.

A neutralization treatment unit 110 is provided in the circulation system 100. The neutralization treatment unit 110 performs neutralization treatment on the water W2 sucked from the water recovery tank 70 by the pump 101. The water W subjected to the neutralization treatment in the neutralization treatment unit 110 is supplied to the treatment tank 60 through the circulation system 100. Here, as the neutralization treatment, neutralization treatment using dilute sulfuric acid can be exemplified. Further, the concentration of ammonia after the neutralization treatment may be 20 ppm or less and more preferably less than 10 ppm.

The circulation system 100 includes a bypass system 120 that bypasses the neutralization treatment unit 110. The circulation system 100 includes a switching valve (not shown) that switches the flow of the water W2 between the neutralization treatment unit 110 and the bypass system 120, and can select whether or not to perform the neutralization treatment in the neutralization treatment unit 110. In the neutralization treatment unit 110, the neutralization treatment may be performed through the water W only in a case where the concentration of ammonia in the water W detected by a sensor (not shown) exceeds an upper limit value determined in advance. Further, the neutralization treatment unit 110 may constantly perform neutralization treatment on the water W flowing through the circulation system 100.

The treatment tank 60 of the ship 1 of the fourth embodiment includes a water injection unit 68D. The water injection unit 68D injects the water W in the form of a shower downward from above the water surface Wf of the water W in the treatment tank 60. In the fourth embodiment, the water injection unit 68D injects the water W (W2) circulated from the water recovery tank 70 through the circulation system 100 into the treatment tank 60.

Further, the water recovery tank 70 includes a dilution water introduction system 80D. The dilution water introduction system 80D supplies the dilution water introduced from the outside into the water recovery tank 70 as water Ws. The water recovery tank 70 is provided with a water supply unit 78D. The water supply unit 78D supplies the dilution water introduced from the outside through the dilution water introduction system 80D downward from the upper portion of the water recovery tank 70 as the water Ws. In the fourth embodiment, the dilution water introduction system 80D introduces fresh water from a fresh water tank (not shown) provided in the hull 2 and supplies it as the water Ws from the water supply unit 78D. In this way, the water W2 in the water recovery tank 70 is diluted with the water Ws, which is fresh water, and an increase in ammonia concentration is suppressed. In the fourth embodiment, the water W (W2) is circulated between the treatment tank 60 and the water recovery tank 70, and fresh water is used for reasons such as rust prevention.

A discharge system 90D is connected to the neutralization treatment unit 110. The discharge system 90D discharges the surplus water W2, which is generated when the dilution water (water Ws) is introduced from the outside by the dilution water introduction system 80D, from the water recovery tank 70 to the outside. The discharge system 90D discharges some of the water W2 stored in the water recovery tank 70 to the outside after the neutralization treatment in the neutralization treatment unit 110. The discharge system 90D includes a delivery pipe 92 that delivers the water W2 neutralized in the neutralization treatment unit 110.

The discharge system 90D further includes the seawater supply unit 99. The seawater supply unit 99 supplies the seawater taken in from the outside to water W3 that is discharged from the neutralization treatment unit 110 through the delivery pipe 92. The seawater supply unit 99 merges the seawater that is supplied from a main cooling seawater pump (not shown) or the like with the water in the delivery pipe 92 and sends it to the discharge pipe 93. In this way, the water W3 in the delivery pipe 92 is diluted. An on/off valve 95 is provided in the discharge pipe 93. The on/off valve 95 is opened, so that as necessary, some of the water W3 discharged from the neutralization treatment unit 110 can be diluted with the seawater that is supplied from the seawater supply unit 99 and then discharged overboard from the discharge pipe 93.

According to the configuration as described above, as in the first embodiment, it becomes possible to reduce the amount of ammonia released into the atmosphere by passing through the treatment tank 60. Further, the water recovery tank 70 for storing the water W2 that is discharged from the treatment tank 60 is further provided. In this way, the water W2 in which ammonia is dissolved in the treatment tank 60 can be stored in the water recovery tank 70.

Further, the ship 1 includes the circulation system 100. In this way, some of the water W2 recovered from the treatment tank 60 to the water recovery tank 70 is circulated to the treatment tank 60, so that ammonia can be recovered using more water W in an ammonia recovery device as a whole.

Further, the ship 1 includes the neutralization treatment unit 110. In this way, neutralization treatment is performed on the ammonia in the water W2 in the water recovery tank 70 by the neutralization treatment unit 110, so that an increase in the ammonia concentration in the water W (W2) is suppressed. Further, in a case where the water W2 is discharged overboard, the water W3 whose ammonia concentration is lowered by the neutralization treatment can be discharged overboard.

Further, the water W in which ammonia is dissolved is diluted with the dilution water (water Ws) introduced from the outside by the dilution water introduction system 80D, so that an increase in ammonia concentration in the water W (W2) circulating between the water recovery tank 70 and the treatment tank 60 is suppressed. Further, the ammonia concentration in the water W3 discharged overboard can be lowered.

Further, the treatment tank 60 includes the water injection unit 68D. In this way, the water W injected from the water injection unit 68D comes into contact with the ammonia released into atmosphere above the water surface Wf, so that the ammonia recovery efficiency is enhanced.

Further, the seawater supply unit 99 is provided in the discharge system 90D, so that the ammonia concentration of the water W which is discharged overboard from the discharge system 90D can be lowered by the seawater which is supplied from the seawater supply unit 99.

The embodiments of the present disclosure have been described in detail above with reference to the drawings. However, the specific configurations are not limited to these embodiments and also include design changes and the like within a scope which does not depart from the gist of the present disclosure.

In the first embodiment described above, the platelike porous member 63 is provided. However, a member of any shape may be used as long as the bubbles Gv pass through it, so that the bubbles Gv are made finer. For the porous member, for example, a sponge-like porous member or the like having a large number of holes can be adopted. Further, the hole 63h is not limited to a circular shape. For example, the hole 63h may be an elongated hole, a polygonal hole, a slit-shaped hole, or the like.

Further, in each of the embodiments described above, the ammonia in the purge target region 20p is introduced into the treatment tank 60 by the inert gas supply device 50. However, the ammonia may be introduced into the treatment tank 60 from a pipe in another appropriate portion as long as it is the circulation path R for ammonia, which communicates with the ammonia storage tank.

Further, in the embodiments described above, the internal combustion engine 8 is shown as a device that is driven by the ammonia that is supplied from the ammonia storage tank. However, the use of the internal combustion engine 8 is not limited at all. Further, the device is not limited to the internal combustion engine 8, and may be a boiler or the like as long as it is driven by ammonia.

Further, the ammonia storage tank is provided on the stern 3b side with respect to the superstructure 4. However, there is no limitation thereto. For example, the ammonia storage tank may be provided on the upper deck 7 on the bow 3a side with respect to the superstructure 4. Furthermore, the ammonia storage tank may be provided not only on the upper deck 7 but also inside the hull 2 below the upper deck 7.

In addition, the ammonia that is introduced into the treatment tank 60 is not limited to the ammonia that is stored in the ammonia storage tank storing fuel for propelling the ship 1 and may be ammonia that is stored in a tank for cargo that is carried by the ship 1.

### <Additional Remark>

The ship 1 described in each of the embodiments is understood as follows, for example.

(1) A ship 1 according to a first aspect includes the hull 2, the ammonia storage tank 10 capable of storing ammonia therein, the inert gas supply device 50 that supplies an inert gas to the circulation path R for ammonia, which communicates with the ammonia storage tank 10, the vent pipe 38 that leads the ammonia in the circulation path R to the outside together with the inert gas supplied by the inert gas supply device 50, and the treatment tank 60 which is provided in the middle of the vent pipe 38 and stores the water W therein, and into which the inert gas and the ammonia are introduced from the vent pipe 38 below the water surface Wf of the water W.

In the ship 1, when the inert gas is supplied from the inert gas supply device 50 to the ammonia circulation path R, the ammonia in the circulation path R is extruded to the vent pipe 38 together with the inert gas. In this way, so-called purging, in which the ammonia in the circulation path R is replaced with the inert gas, can be performed. The ammonia-containing gas Gn extruded to the vent pipe 38 is introduced to below the water surface Wf of the water W stored in the treatment tank 60 from the vent pipe 38. The ammonia-containing gas G forms the bubbles Gv in the water W in the treatment tank 60 and floats upward from below. At this time, the water W comes into contact with the ammonia-containing gas G. Ammonia easily reacts with the water W2, so that it becomes ammonia water due to the reaction with the water W and dissolves in the water. In this way, the content of ammonia in the gas Gn that is led from the vent pipe 38 to the outside through the treatment tank 60 is reduced. On the other hand, nitrogen is difficult to dissolve in the water W, floats in the state of the bubbles Gv, and is released into atmosphere above the water surface Wf. In this way, it becomes possible to reduce the amount of ammonia released into the atmosphere.

(2) In a ship 1 according to a second aspect, in the ship 1 of the above (1), the treatment tank 60 is provided with the porous member 63 that is provided below the water surface Wf of the water W and has a plurality of holes 63h through which the bubbles Gv of the inert gas and the ammonia which float upward from below in the water W pass.

In this way, the ammonia-containing gas G which floats upward from below in the state of the bubbles Gv below the water surface Wf of the water in the treatment tank 60 passes through the holes 63h of the porous member 63, so that the bubbles Gv are made finer according to the diameter of the hole 63h. The bubbles Gv of the ammonia-containing gas G are made finer, so that the contact area between the bubbles Gv of the ammonia-containing gas G and the water increases. As a result, the ammonia reacts with the water W in the treatment tank 60 and easily dissolves in the water W. In this way, it is possible to more efficiently reduce the amount of ammonia released into the atmosphere.

(3) In a ship 1 according to a third aspect, in the ship 1 of the above (1) or (2), the treatment tank 60 is provided with the partition plate 65 that is provided along a plane intersecting the up-down direction Dv below the water surface Wf of the water W.

In this way, when the bubbles Gv of the ammonia-containing gas G floating upward from below in the treatment tank 60 hit against the partition plates 65, the bubbles Gv flow along the partition plate 65. In this way, the length of the path F of the flow of the bubbles Gv of the ammonia-containing gas G in the treatment tank 60 increases. In this way, the contact time between the bubbles Gv of the ammonia-containing gas G and the water W increases. As a result, the ammonia reacts with the water W in the treatment tank 60 and easily dissolves in the water W. In this way, it is possible to more efficiently reduce the amount of ammonia released into the atmosphere.

(4) In a ship 1 according to a fourth aspect, the ship 1 of any one of the above (1) to (3) further includes the water recovery tank 70 provided in the hull 2 to store the water W2 that is discharged from the treatment tank 60.

In this way, the water W2 in which ammonia is dissolved in the treatment tank 60 can be stored in the water recovery tank 70. In the treatment tank 60, for example, treatment to dilute the ammonia contained in the recovered water W2, neutralization treatment, or the like can also be performed.

(5) In a ship 1 according to a fifth aspect, the ship 1 of the above (4) further includes the circulation system 100 that circulates some of the water W2 stored in the water recovery tank 70 to the treatment tank 60.

In this way, some of the water W2 recovered from the treatment tank 60 to the water recovery tank 70 is circulated to the treatment tank 60, so that ammonia can be recovered by using more water W as a whole.

(6) In a ship 1 according to a sixth aspect, in the ship 1 of the above (4) or (5), the treatment tank 60 includes the water injection unit 68C or 68D that injects the water W or Wk downward from above the water surface Wf of the water W.

In the treatment tank 60, ammonia that has not completely dissolved in the water W in the treatment tank 60 is released into atmosphere above the water surface Wf together with the inert gas. The water W or Wk injected by the water injection unit 68C or 68D comes into contact with the ammonia released into atmosphere above the water surface Wf, so that the ammonia recovery efficiency in the treatment tank 60 is enhanced.

(7) In a ship 1 according to a seventh aspect, the ship 1 of any one of the above (4) to (6) further includes the neutralization treatment unit 110 that performs neutralization treatment on the water W2 in the water recovery tank 70.

In this way, neutralization treatment is performed on the ammonia in the water W2 in the water recovery tank 70 by the neutralization treatment unit 110, so that an increase in ammonia concentration in the water W or W2 is suppressed. Further, in a case where the water W2 is discharged overboard, the water W2 whose ammonia concentration is lowered by the neutralization treatment can be discharged overboard.

(8) In a ship 1 according to an eighth aspect, the ship 1 of any one of the above (4) to (7) further includes: the dilution water introduction system 80C or 80D that introduces dilution water from the outside into at least one of the treatment tank 60 and the water recovery tank 70; and the discharge system 90C or 90D that discharges some of the water W2 stored in the water recovery tank 70.

In this way, in a case where the water W2 is discharged overboard from the discharge systems 90C or 90D, the water W2 in which the ammonia is dissolved is diluted with the dilution water introduced from the outside by the dilution water introduction systems 80C or 80D, so that the ammonia concentration of the water W2 which is discharged can be lowered. Further, in a case where some of the water W2 in the water recovery tank 70 is circulated to the treatment tank 60 by the circulation system 100, an increase in ammonia concentration in the water W (W2) that circulates between the water recovery tank 70 and the treatment tank 60 is suppressed.

(9) In a ship 1 according to a ninth aspect, the ship 1 of the above (8) further includes the seawater supply unit 99 that supplies seawater taken in from the outside to the discharge system 90C or 90D.

In this way, the ammonia concentration of the water W2 that is discharged overboard from the discharge system 90C or 90D can be lowered by the seawater that is supplied from the seawater supply unit 99.

### Industrial Applicability

According to the ship of the present disclosure, it is possible to reduce the amount of ammonia released into the atmosphere.

### Reference Signs List

1: ship
2: hull
3a: bow
3b: stern
4: superstructure
5A, 5B: broadside
6: ship bottom
7: upper deck
8: internal combustion engine
10: ammonia storage tank
20: pipe system
20p: purge target region
21: supply pipe
22: return pipe
23, 24: on/off valve
30: vent post
38: vent pipe
38A: upstream-side vent pipe
38B: downstream-side vent pipe
39: purge on/off valve
50: inert gas supply device
51: inert gas supply unit
52: inert gas supply pipe
53: inert gas supply valve
60: treatment tank
60s, 60t: side surface
63: porous member
63h: hole
65, 65A, 65B: partition plate
68C, 68D: water injection unit
70: water recovery tank
71: recovery pipe
72: water recovery on/off valve
78C, 78D: water supply unit
80C, 80D: dilution water introduction system
81: pump
82: on/off valve
90C, 90D: discharge system
91: overflow pipe
92: delivery pipe
93: discharge pipe
95: on/off valve
99: seawater supply unit
100: circulation system
101: pump
110: neutralization treatment unit
120: bypass system
Dv: up-down direction
F: path
FA: bow-stern direction
G: gas
Gn: gas
Gv: bubble
R: circulation path
W, W2, W3, Wk, Ws: water
Wf, Wf2: water surface

## Claims

1. A ship (1) comprising:
a hull (2); and
an ammonia storage tank (10) capable of storing ammonia therein;
an inert gas supply device (50) that supplies an inert gas to a circulation path (R) for the ammonia, which communicates with the ammonia storage tank (10);
a vent pipe (38) that leads the ammonia in the circulation path (R) together with the inert gas supplied by the inert gas supply device (50) to an outside; and
a treatment tank (60) which is provided in a middle of the vent pipe (38) and stores water (W) therein, and into which the inert gas and the ammonia are introduced from the vent pipe (38) below a water surface (Wf) of the water (W).

2. The ship (1) according to Claim 1, wherein the treatment tank (60) is provided with a porous member (63) that is provided below the water surface (Wf) of the water (W) and has a plurality of holes (63h) through which bubbles (Gv) of the inert gas and the ammonia, which float upward from below in the water (W), pass.

3. The ship (1) according to Claim 1 or 2, wherein the treatment tank (60) is provided with a partition plate (65) that is provided along a plane intersecting an up-down direction (Dv) below the water surface (Wf) of the water (W).

4. The ship (1) according to any one of Claims 1 to 3, further comprising:
a water recovery tank (70) provided in the hull (2) to store water (W2) that is discharged from the treatment tank (60).

5. The ship (1) according to Claim 4, further comprising:
a circulation system (100) that circulates some of the water (W2) stored in the water recovery tank (70) to the treatment tank (60).

6. The ship (1) according to Claim 4 or 5, wherein the treatment tank (60) includes a water injection unit (68C, 68D) that injects water (W, Wk) downward from above the water surface (Wf) of the water (W).

7. The ship (1) according to any one of Claims 4 to 6, further comprising:
a neutralization treatment unit (110) that performs neutralization treatment on the water (W2) in the water recovery tank (70).

8. The ship (1) according to any one of Claims 4 to 7, further comprising:
a dilution water introduction system (80C, 80D) that introduces dilution water from the outside into at least one of the treatment tank (60) and the water recovery tank (70); and
a discharge system (90C, 90D) that discharges some of the water stored in the water recovery tank (70).

9. The ship (1) according to Claim 8, further comprising:
a seawater supply unit (99) that supplies seawater taken in from the outside to the discharge system (90C, 90D).

## Patentansprüche

1. Schiff (1) umfassend:
einen Schiffsrumpf (2); und
einen Ammoniak-Lagertank (10), der in der Lage ist, Ammoniak zu lagern;
eine Inertgasversorgungsvorrichtung (50), die ein Inertgas in einen Umlaufsweg (R) für das Ammoniak versorgt, der mit dem Ammoniak-Lagertank (10) in Kommunikation steht;
eine Entlüftungsleitung (38), die das Ammoniak in den Umlaufsweg (R) zusammen mit dem von der Inertgasversorgungsvorrichtung (50) versorgten Inertgas nach außen führt; und
einen Behandlungstank (60), der in der Mitte der Entlüftungsleitung (38) vorgesehen ist und in dem Wasser (W) gelagert wird, und in den das Inertgas und das Ammoniak aus der Entlüftungsleitung (38) unterhalb einer Wasseroberfläche (Wf) des Wassers (W) eingeleitet werden.

2. Schiff (1) nach Anspruch 1, wobei der Behandlungstank (60) mit einem porösen Element (63) versehen ist, das unterhalb der Wasseroberfläche (Wf) des Wassers (W) vorgesehen ist und eine Vielzahl von Löchern (63h) aufweist, durch die Blasen (Gv) des Inertgases und des Ammoniaks, die in dem Wasser (W) von unten nach oben schwimmen, hindurchtreten.

3. Schiff (1) nach Anspruch 1 oder 2, wobei der Behandlungstank (60) mit einer Trennplatte (65) versehen ist, die entlang einer Ebene vorgesehen ist, die durch eine Nach Oben und Unten-Richtung (Dv) unterhalb der Wasseroberfläche (Wf) des Wassers (W) kreuzt.

4. Schiff (1) nach einem der Ansprüche 1 bis 3, ferner umfassend:
einen Wasserrückgewinnungstank (70), der in dem Rumpf (2) vorgesehen ist, um Wasser (W2) zu lagern, das aus dem Behandlungstank (60) abgelassen wird.

5. Schiff (1) nach Anspruch 4, ferner umfassend:
ein Umlaufsystem (100), das einen Teil des in dem Wasserrückgewinnungstank (70) gelagerten Wassers (W2) zum Behandlungstank (60) umlaufen lässt.

6. Schiff (1) nach Anspruch 4 oder 5, wobei der Behandlungstank (60) eine Wasserspritzeinheit (68C, 68D) umfasst, die Wasser (W, Wk) von oberhalb der Wasseroberfläche (Wf) des Wassers (W) nach unten spritzt.

7. Schiff (1) nach einem der Ansprüche 4 bis 6, ferner umfassend:
eine Neutralisationsbehandlungseinheit (110), die eine Neutralisationsbehandlung des Wassers (W2) in dem Wasserrückgewinnungstank (70) durchführt.

8. Schiff (1) nach einem der Ansprüche 4 bis 7, ferner umfassend:
ein Verdünnungswassereinleitungssystem (80C, 80D), das Verdünnungswasser von außen in den Behandlungstank (60) und/oder in den Wasserrückgewinnungstank (70) einleitet; und
ein Ablasssystem (90C, 90D), das einen Teil des in dem Wasserrückgewinnungstank (70) gelagerten Wassers ablässt.

9. Schiff (1) nach Anspruch 8, ferner umfassend:
eine Seewasserversorgungseinheit (99), die von außen angesaugtes Seewasser in das Abflusssystem (90C, 90D) versorgt.

## Revendications

1. Navire (1) comprenant :
une coque (2) ; et
un réservoir de stockage d'ammoniac (10) pouvant contenir de l'ammoniac ;
un dispositif d'alimentation en gaz inerte (50) qui fournit un gaz inerte à une voie de circulation (R) pour l'ammoniac, qui communique avec le réservoir de stockage d'ammoniac (10) ;
un tuyau de ventilation (38) qui conduit l'ammoniac dans la voie de circulation (R) avec le gaz inerte fourni par le dispositif d'alimentation en gaz inerte (50) vers l'extérieur ; et
un réservoir de traitement (60) situé au milieu du tuyau de ventilation (38), dans lequel est stockée l'eau (W) et dans lequel le gaz inerte et l'ammoniac sont introduits depuis le tuyau de ventilation (38) sous la surface de l'eau (Wf) de l'eau (W).

2. Navire (1) selon la revendication 1, dans lequel le réservoir de traitement (60) est pourvu d'un élément poreux (63) situé sous la surface de l'eau (Wf) et comportant plusieurs trous (63h) par lesquels passent les bulles (Gv) de gaz inerte et d'ammoniac qui flottent vers le haut depuis le bas dans l'eau (W).

3. Navire (1) selon la revendication 1 ou 2, dans lequel le réservoir de traitement (60) est pourvu d'une plaque de séparation (65) disposée le long d'un plan coupant une direction haut-bas (Dv) sous la surface de l'eau (Wf) de l'eau (W).

4. Navire (1) selon l'une quelconque des revendications 1 à 3, comprenant en outre :
un réservoir de récupération d'eau (70) prévu dans la coque (2) pour stocker l'eau (W2) qui est déchargée du réservoir de traitement (60).

5. Navire (1) selon la revendication 4, comprenant en outre :
un système de circulation (100) qui fait circuler une partie de l'eau (W2) stockée dans le réservoir de récupération de l'eau (70) vers le réservoir de traitement (60).

6. Navire (1) selon la revendication 4 ou 5, dans lequel le réservoir de traitement (60) comprend une unité d'injection d'eau (68C, 68D) qui injecte de l'eau (W, Wk) vers le bas à partir de la surface de l'eau (Wf) de l'eau (W).

7. Navire (1) selon l'une quelconque des revendications 4 à 6, comprenant en outre :
une unité de traitement de neutralisation (110) qui effectue un traitement de neutralisation sur l'eau (W2) dans le réservoir de récupération de l'eau (70) .

8. Navire (1) selon l'une quelconque des revendications 4 à 7, comprenant en outre :
un système d'introduction d'eau de dilution (80C, 80D) qui introduit de l'eau de dilution de l'extérieur dans au moins l'un des réservoirs de traitement (60) et de récupération de l'eau (70) ; et
un système d'évacuation (90C, 90D) qui évacue une partie de l'eau stockée dans le réservoir de récupération d'eau (70).

9. Navire (1) selon la revendication 8, comprenant en outre :
une unité d'alimentation en eau de mer (99) qui fournit de l'eau de mer prélevée à l'extérieur au système d'évacuation (90C, 90D).
